# EUROPEAN PATENT APPLICATION

(11) **EP 4 282 994 A1**
(43) Date of publication of application: **29.11.2023**
(21) Application number: 21933276.4
(22) Date of filing: 20.12.2021
(51) Int. Cl.: C21D 9/46, C23G 1/08, C23G 3/02, C22C 38/00, C22C 38/02, C22C 38/58

(54) **METHOD FOR PRODUCING ANNEALED AND PICKLED STEEL SHEET**

(30) Priority: 26.03.2021 JP 2021054006
(71) Applicant: JFE Steel Corporation, Tokyo 100-0011 (JP)
(72) Inventor: TAKEYAMA, Hayato, Tokyo 100-0011 (JP); MIZUNO, Daisuke, Tokyo 100-0011 (JP)
(74) Representative: Hoffmann Eitle
(86) International application number: PCT/JP2021/047093
(87) International publication number: WO 2022/201686

(57) **Abstract**

To provide a method for producing an annealed and pickled steel sheet that can continuously and stably produce an annealed and pickled steel sheet that is excellent in chemical convertibility, post-coating corrosion resistance, and surface appearance quality. Disclosed is a method for producing an annealed and pickled steel sheet in a continuous manner by continuously performing: subjecting a cold-rolled steel sheet to annealing in an annealing furnace by feeding the cold-rolled steel sheet through the annealing furnace to obtain an annealed steel sheet; subjecting the annealed steel sheet discharged from the annealing furnace to pickling with a mixed acid solution containing a first acid that is oxidizing and a second acid that is non-oxidizing, by feeding the annealed steel sheet into a mixed acid tank holding the mixed acid solution; and subjecting the annealed steel sheet discharged from the mixed acid tank to repickling with an acid solution containing a third acid that is non-oxidizing, by feeding the annealed steel sheet into an acid tank holding the acid solution, to thereby obtain an annealed and pickled steel sheet. Fe concentration in the mixed acid solution in the mixed acid tank is measured, and a lower limit of ferrite fraction in a surface layer of the annealed steel sheet to be subjected to the pickling is set according to the Fe concentration measured.

## Description

### TECHNICAL FIELD

This disclosure relates to a method for producing annealed and pickled steel sheets in a continuous manner by subjecting cold-rolled steel sheets to annealing, pickling, and repickling.

### BACKGROUND

In recent years, from a viewpoint of global environmental protection, there are strong demands for improving fuel efficiency and crashworthiness of automobiles, which requires weight-reduction and strengthening of automotive bodies. To respond to these demands, the simultaneous achievement of both weight-reduction and strengthening of automotive bodies is being actively promoted through strengthening and sheet metal thinning (weight-reduction) of cold-rolled steel sheets used as a material for automotive components. However, since many automotive components are produced through forming of a cold-rolled steel sheet, the cold-rolled steel sheet serving as a material for these components is required to have excellent formability in addition to high strength.

One way to increase the strength of a cold-rolled steel sheet without significant loss of formability is solid solution strengthening through Si addition. However, the addition of a large amount of Si to a cold-rolled steel sheet is known to result in the formation of a large amount of Si-containing oxides such as SiO₂ and Si-Mn-based composite oxides on the surface of the steel sheet during annealing after cold rolling, resulting in poor chemical convertibility and post-coating corrosion resistance.

As a technology to solve this issue, JP 2012-132092 A (PTL 1) describes a method for producing an annealed and pickled steel sheet in a continuous manner by continuously performing: subjecting a cold-rolled steel sheet to annealing to obtain an annealed steel sheet; and subjecting the annealed steel sheet to pickling by feeding the annealed steel sheet into a mixed acid solution containing an oxidizing acid such as nitric acid and a non-oxidizing acid such as hydrochloric acid or hydrofluoric acid to immerse the annealed steel sheet; and then subjecting the annealed steel sheet to repickling by feeding the annealed steel sheet into an acid solution containing a non-oxidizing acid such as hydrochloric acid or sulfuric acid to immerse the annealed steel sheet. In this method, the pickling step removes Si-containing oxides on the surface of the steel sheet generated by continuous annealing, and the repickling step removes iron-based oxides generated in the pickling step, thereby producing an annealed and pickled steel sheet with excellent chemical convertibility and post-coating corrosion resistance.

However, when an annealed and pickled steel sheet is continuously produced by the two-step pickling as described in PTL 1, the surface appearance quality of the resulting annealed and pickled steel sheet deteriorates because the Fe concentration in the mixed acid solution and the temperature of the mixed acid solution increase as time goes by, resulting in an excessively high pickling rate. In this regard, WO 2017/007036 A (PTL 2) describes a method for continuously producing an annealed and pickled steel sheet with excellent surface appearance quality, in which concentration of an oxidizing acid in a mixed acid solution is lowered and concentration of a non-oxidizing acid in the mixed acid solution is raised as the Fe concentration in the mixed acid solution rises, to thereby suppress a rise in the temperature of the mixed acid solution, making it possible to continuously produce an annealed and picked steel sheet with excellent surface appearance quality.

### CITATION LIST

### Patent Literature

PTL 1: JP 2012-132092 A
PTL 2: WO 2017/007036 A

### SUMMARY

### (Technical Problem)

However, the present inventors found that even when an annealed and pickled steel sheet is continuously produced by the two-step pickling as described in PTL 1, or even when the temperature of the mixed acid solution is maintained within an appropriate range by applying the method described in PTL 2, the surface appearance quality of the resulting annealed and pickled steel sheet may deteriorate over time. When surface appearance quality deteriorates in this way, the surface of the steel sheet immediately after the pickling step turns black, and this discoloration is not removed by the repickling step. It was also found that this discolored area easily detached from the surface of the steel sheet to form a black powder, which easily caused equipment contamination.

In view of the above, it would thus be helpful to provide a method for producing an annealed and pickled steel sheet that enables continuous and stable production of annealed and pickled steel sheets that are excellent in chemical convertibility, post-coating corrosion resistance, and surface appearance quality.

### (Solution to Problem)

Our study revealed a correlation between the ferrite fraction in the surface layer of the annealed steel sheet to be subjected to pickling, the Fe concentration in the mixed acid solution in the pickling, and the surface appearance quality of the annealed and pickled steel sheet to be produced. Specifically, when an annealed steel sheet with a low ferrite fraction in the surface layer is subjected to pickling, Fe gradually elutes from the annealed steel sheet into the mixed acid solution during the pickling, and as the Fe concentration in the mixed acid solution increases, the surface of the steel sheet immediately after the pickling tends to turn black.

The present inventors investigated the cause of this phenomenon and found that ferrite dissolves faster during pickling with a mixed acid solution than martensite and retained austenite, and this difference is more pronounced when the Fe concentration in the mixed acid solution is high. Then, it was revealed that when an annealed steel sheet with a low ferrite fraction in the surface layer is subjected to pickling, as the Fe concentration in the mixed acid solution increases, the entire surface layer is not fully removed, and martensite and retained austenite remain on the surface of the steel sheet after the pickling, forming surface irregularities and giving the surface a black color. The martensite and retained austenite remaining on the surface of the steel sheet were then exfoliated, resulting in a black powder. Therefore, in order to prevent deterioration of surface appearance quality even when the Fe concentration in the mixed acid solution increases, it is necessary to set the lower limit of the ferrite fraction in the surface layer of an annealed steel sheet to be subjected to pickling according to the Fe concentration in the mixed acid solution. As used herein, the term "Fe concentration" is used to refer to the concentration of iron ions, specifically the sum of the concentrations of iron (II) and iron (III) ions.

The present disclosure was completed based on these discoveries, and primary features thereof are as described below.
[1] A method for producing an annealed and pickled steel sheet in a continuous manner by continuously performing:
   subjecting a cold-rolled steel sheet to annealing by feeding the cold-rolled steel sheet through an annealing furnace to obtain an annealed steel sheet;
   subjecting the annealed steel sheet discharged from the annealing furnace to pickling with a mixed acid solution containing a first acid that is oxidizing and a second acid that is non-oxidizing, by feeding the annealed steel sheet into a mixed acid tank holding the mixed acid solution; and
   subjecting the annealed steel sheet discharged from the mixed acid tank to repickling with an acid solution containing a third acid that is non-oxidizing, by feeding the annealed steel sheet into an acid tank holding the acid solution, to thereby obtain an annealed and pickled steel sheet, wherein
   Fe concentration in the mixed acid solution in the mixed acid tank is measured, and
   a lower limit of ferrite fraction in a surface layer of the annealed steel sheet to be subjected to the pickling is set according to the Fe concentration measured.
[2] The method for producing an annealed and pickled steel sheet according to aspect [1], wherein the lower limit of the ferrite fraction in the surface layer of the annealed steel sheet to be subjected to the pickling is set higher as the Fe concentration rises.
[3] The method for producing an annealed and pickled steel sheet according to aspect [1] or [2], wherein the lower limit of the ferrite fraction is set by adjusting an annealing condition in the annealing.
[4] The method for producing an annealed and pickled steel sheet according to aspect [3], wherein the annealing condition is a dew point in a soaking zone of the annealing furnace.
[5] The method for producing an annealed and pickled steel sheet according to any one of aspects [1] to [4], wherein the first acid is nitric acid.
[6] The method for producing an annealed and pickled steel sheet according to any one of aspects [1] to [5], wherein the second acid is at least one selected from the group consisting of hydrochloric acid, sulfuric acid, phosphoric acid, pyrophosphoric acid, formic acid, acetic acid, citric acid, hydrofluoric acid, and oxalic acid.
[7] The method for producing an annealed and pickled steel sheet according to any one of aspects [1] to [6], wherein the third acid is at least one selected from the group consisting of hydrochloric acid, sulfuric acid, phosphoric acid, pyrophosphoric acid, formic acid, acetic acid, citric acid, hydrofluoric acid, and oxalic acid.
[8] The method for producing an annealed and pickled steel sheet according to any one of aspects [1] to [7], wherein the cold-rolled steel sheet has a chemical composition containing 0.50 mass% to 3.00 mass% of Si.
[9] The method for producing an annealed and pickled steel sheet according to aspect [8], wherein the chemical composition contains (consists of), in mass%, C: 0.03 % to 0.45 %, Si: 0.50 % to 3.00 %, Mn: 0.5 % to 5.0 %, P: 0.05 % or less, S: 0.005 % or less, Al: 0.001 % to 0.060 %, N: 0.005 % or less, and B: 0.001 % to 0.005 %, with the balance being Fe and inevitable impurities.
[10] The method for producing an annealed and pickled steel sheet according to aspect [9], wherein the chemical composition further contains, in mass%, at least one selected from the group consisting of Cu: 1.00 % or less, Nb: 0.050 % or less, Ti: 0.080 % or less, V: 0.5 % or less, Mo: 1.00 % or less, Cr: 1.000 % or less, and Ni: 1.00 % or less.

### (Advantageous Effect)

According to the method for producing an annealed and pickled steel sheet disclosed herein, it is possible to continuously and stably produce an annealed and pickled steel sheet that is excellent in chemical convertibility, post-coating corrosion resistance, and surface appearance quality.

### BRIEF DESCRIPTION OF THE DRAWINGS

In the accompanying drawings:
FIG. 1 is a schematic diagram of an annealing and pickling system capable of implementing the method for producing an annealed and pickled steel sheet according to one embodiment of the present disclosure; and
FIG. 2 is a graph illustrating the relationship between the Fe concentration in the mixed acid solutions, the ferrite fraction in the surface layers of the annealed steel sheets, and the surface appearance quality of the annealed and pickled steel sheets, as described later in the EXAMPLES section below.

### DETAILED DESCRIPTION

The method for producing an annealed and pickled steel sheet according to one embodiment of the present disclosure produces an annealed and pickled steel sheet in a continuous manner by continuously performing annealing, pickling, and repickling, which will be described in detail below.

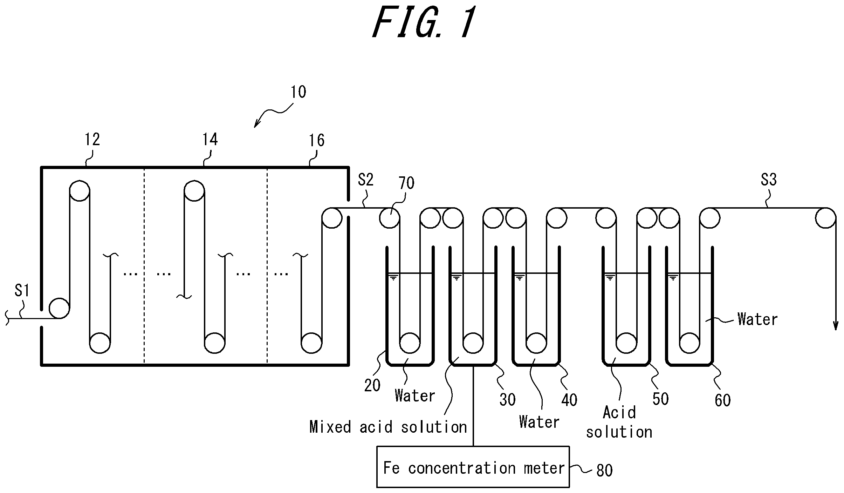

In this embodiment, the annealing, pickling, and repickling are performed continuously on the same line, for example, by an annealing and pickling system illustrated in FIG. 1. The annealing and pickling system illustrated in FIG. 1 includes, in this order from upstream to downstream in the direction steel sheets are traveling, a continuous annealing line (CAL) 10, a water tank 20 that holds water, a mixed acid tank 30 that holds a mixed acid solution containing a first acid that is oxidizing and a second acid that is non-oxidizing, a water tank 40 that holds water, an acid tank 50 that holds an acid solution containing a third acid that is non-oxidizing, and a water tank 60 that holds water. A sheet feeder including a plurality of rollers 70 can feed steel sheets sequentially to the continuous annealing furnace 10 and the five tanks mentioned above.

### [Annealing]

Referring to FIG. 1, in the annealing, a cold-rolled steel sheet S1 is subjected to annealing in a continuous annealing furnace 10 by feeding the cold-rolled steel sheet through the continuous annealing furnace 10 to obtain an annealed steel sheet S2. The annealing is performed to impart the desired microstructure, strength, and workability to the cold-rolled steel sheet S1. The annealing furnace 10 may have multiple regions, and in the example in FIG. 1 includes, in order from upstream in the sheet passage direction, a heating zone 12, a soaking zone 14, and a cooling zone 16. The configuration of the continuous annealing furnace is not limited as illustrated in FIG. 1; for example, there may be a preheating zone upstream of the heating zone 12, the cooling zone 16 may include multiple cooling zones, or there may be an overaging zone downstream of the cooling zone 16.

In the heating zone 12, the cold-rolled steel sheet S1 may be heated directly using a burner or indirectly using a radiant tube (RT) or an electric heater. The average temperature inside the heating zone 12 is preferably set in the range of 500 °C to 800 °C. To the heating zone 12, gas is flowed from the soaking zone 14, while at the same time a non-oxidizing or reducing gas is separately supplied. For example, N₂ gas is used as a non-oxidizing gas, and H₂-N₂ mixed gas is used as a reducing gas. The dew point of the heating zone 12 is preferably -50 °C or higher. It is preferably 20 °C or lower.

In the soaking zone 14, the cold-rolled steel sheet S1 can be heated indirectly using a radiant tube (RT). The average temperature inside the soaking zone 14 (soaking temperature) is preferably 600 °C or higher. It is preferably 950 °C or lower. A non-oxidizing or reducing gas is supplied to the soaking zone 14. For example, N₂ gas is used as a non-oxidizing gas, and H₂-N₂ mixed gas is used as a reducing gas. The dew point of the soaking zone 14 is preferably -50 °C or higher. It is preferably 20 °C or lower.

In the cooling zone 16, the cold-rolled steel sheet S1 is cooled. The cold-rolled steel sheet S1 is cooled to approximately 100 °C to 400 °C at the time of exiting the continuous annealing furnace 10.

### [Pickling]

Referring to FIG. 1, in the pickling, the annealed steel sheet S2 discharged from the annealing furnace 10 is subjected to pickling with a mixed acid solution containing a first acid that is oxidizing and a second acid that is non-oxidizing, by feeding the annealed steel sheet S2 into a mixed acid tank 30 holding the mixed acid solution.

As described above, in the annealing, a non-oxidizing or reducing gas is used as an atmosphere gas, and the dew point is strictly controlled. Therefore, in a general cold-rolled steel sheet with low alloy additions, oxidation on the surface of the steel sheet is suppressed. However, in the case of a cold-rolled steel sheet containing Si and Mn, which are more readily oxidizable elements than Fe, Si and Mn are selectively oxidized to form Si oxides (SiO₂), Si-Mn-based composite oxides, and other Si-containing oxides on the surface of the steel sheet, even when the composition and dew point of the atmosphere gas during the annealing are strictly controlled. In other words, the surface layer of the annealed steel sheet becomes a Si-containing oxide layer, which leads to deterioration of chemical convertibility and post-coating corrosion resistance.

Therefore, in the pickling according to this embodiment, the Si-containing oxide layer on the surface of the annealed steel sheet S2 is removed by continuously feeding the annealed steel sheet S2 into the mixed acid solution containing the oxidizing first acid and the non-oxidizing second acid to immerse the annealed steel sheet S2. The thickness of the Si-containing oxide layer varies depending on the composition of the steel sheet and the annealing conditions (such as temperature, time, and atmosphere), yet is usually about 1 µm from the surface of the steel sheet.

The oxidizing first acid is nitric acid. The reason that the first acid is required in the mixed acid solution is that, among Si-containing oxides, although Si-Mn-based composite oxides readily dissolve in acid, SiOz displays poor solubility, and thus, in order to remove this SiO₂, it is necessary to use an oxidizing acid such as nitric acid so as to remove the steel substrate together with the Si-containing oxide layer at the surface of the steel sheet.

The concentration of the first acid in the mixed acid solution is preferably 100 g/L or higher, and more preferably 110 g/L or higher, from a viewpoint of efficient removal of the Si-containing oxide layer. On the other hand, if the concentration of the first acid is excessively high, it will be difficult to dissolve iron-based oxides by the repickling in the subsequent stage. Therefore, the concentration of the first acid in the mixed acid solution is preferably 150 g/L or lower, and more preferably 140 g/L or lower.

The non-oxidizing second acid is preferably at least one selected from the group consisting of hydrochloric acid, sulfuric acid, phosphoric acid, pyrophosphoric acid, formic acid, acetic acid, citric acid, hydrofluoric acid, and oxalic acid. Among these particularly preferred is at least one selected from the group consisting of hydrochloric acid, sulfuric acid, and hydrofluoric acid. The reason for using such a non-oxidizing acid is to suppress the formation of iron-based oxides that precipitate and deposit on the surface of the steel sheet as a result of pickling with the above-described oxidizing first acid.

The concentration of the second acid in the mixed acid solution is preferably 4.5 g/L or higher, and more preferably 6.5 g/L or higher, from a viewpoint of facilitating dissolution of iron-based oxides by the repickling in the subsequent stage. On the other hand, if the concentration of the second acid is excessively high, the pickling weight loss per unit time is reduced, which may result in residual SiO₂ in the surface of the steel sheet. Therefore, the concentration of the second acid in the mixed acid solution is preferably 12.5 g/L or lower, and more preferably 8.5 g/L or lower.

A preferable pickling time in the pickling is determined based on the pickling weight loss required to remove the Si-containing oxide layer formed in the annealing, pickling efficiency determined by the composition of the mixed acid solution, and pickling length. In general, the temperature of the mixed acid solution is approximately 30 °C to 60 °C and the pickling time is approximately 10 seconds.

### [Repickling]

Referring to FIG. 1, in the repickling, the annealed steel sheet S2 discharged from the mixed acid tank 30 is subjected to repickling with an acid solution containing a third acid that is non-oxidizing, by feeding the the annealed steel sheet S2 into the acid tank 50 holding the acid solution, to thereby obtain an annealed and pickled steel sheet S3.

Fe that dissolves from the surface of the steel sheet through the above-described pickling forms iron-based oxides and these iron-based oxides precipitate and deposit on, and cover the surface of the steel sheet, leading to reduced chemical convertibility. Therefore, these iron-based oxides are removed after the pickling in this embodiment by continuously feeding the annealed steel sheet S2 into an acid solution containing a third acid that is non-oxidizing to immerse the annealed steel sheet S2. The term "iron-based oxide" is used to refer to an oxide having iron as a main component in which the atomic concentration of iron among constituent elements of the oxide other than oxygen is 30 % or higher. These iron-based oxides are oxides that are present with a non-uniform thickness on the surface of the steel sheet and differ from a natural oxide layer that is present as a uniform layer of several nanometers in thickness. Note that iron-based oxides formed at the surface of the annealed steel sheet S2 are known to be amorphous based on observation using a transmission electron microscope (TEM) and analysis results of a diffraction pattern obtained by electron beam diffraction.

The non-oxidizing third acid is preferably at least one selected from the group consisting of hydrochloric acid, sulfuric acid, phosphoric acid, pyrophosphoric acid, formic acid, acetic acid, citric acid, hydrofluoric acid, and oxalic acid. Among these particularly preferred is at least one selected from the group consisting of hydrochloric acid, sulfuric acid, and hydrofluoric acid. Among these acids, hydrochloric acid is suitable because residual matter tends not to remain at the surface of the steel sheet as with sulfate ions in the case of sulfuric acid since hydrochloric acid is a volatile acid, and because the destructive effect on iron-based oxides by chloride ions is large. Alternatively, an acid obtained by mixing hydrochloric acid and sulfuric acid may be used. The second acid used in the pickling and the third acid used in the repickling may be the same type of acid or different types of acids. However, it is preferable to use the same type of acid from a viewpoint of simplification of the production system.

The concentration of the third acid in the acid solution is preferably 4.5 g/L or higher, and more preferably 6.5 g/L or higher, from a viewpoint of sufficiently dissolving iron-based oxides. On the other hand, if the concentration of the third acid is excessively high, there is concern that the acid solution may remain on the surface of the steel sheet and cause discoloration. Therefore, the concentration of the third acid in the acid solution is preferably 12.5 g/L or lower, and more preferably 8.5 g/L or lower.

An appropriate pickling time in the repickling is determined based on the pickling weight loss required to remove iron-based oxides formed by the pickling in the first stage, pickling efficiency determined by the acid composition, and pickling length. In general, the temperature of the acid solution is approximately 30 °C to 60 °C and the pickling time is approximately 10 seconds.

The total pickling weight loss in the pickling and repickling is preferably 8 g/m² or more. When the total pickling weight loss is 8 g/m² or more, Si-containing oxides and iron-based oxides tend not to remain at the surface of the steel sheet and higher chemical convertibility is obtained.

### [Process after Repickling]

The annealed and pickled steel sheet S3 obtained after the repickling can then be made into a steel sheet as a product through normal treatment processes such as temper rolling and leveling.

### [Water Washing]

As in this embodiment, it is preferable to have the water tank 40 between the mixed acid tank 30 and the acid tank 50 and to feed the annealed steel sheet S2 into the water tank 40 for water washing after the pickling and before the repickling. This prevents the mixed acid solution brought out by the annealed steel sheet S2 from the mixed acid tank 30 from mixing into the acid solution in the acid tank 50. Accordingly, this setup is preferable because iron-based oxides can be reliably removed by the repickling in the acid tank 50. It is preferable to have the water tank 20 upstream of the mixed acid tank 30 and to feed the annealed steel sheet S2 into the water tank 20 for water washing before the pickling. This setup allows impurities on the surface of the annealed steel sheet S2 to be removed and prevents impurities from mixing into the mixed acid solution in the mixed acid tank 30. It is preferable to have the water tank 60 downstream of the acid tank 50 and to feed the annealed steel sheet S2 into the water tank 60 for water washing after the repickling. This setup allows the acid solution brought out by the annealed steel sheet S2 from the acid tank 50 to be removed, preventing rust on the surface of the annealed steel sheet S2.

### [Measurement of Fe concentration]

The Fe concentration in the mixed acid solution in the mixed acid tank 30 is zero when the mixed acid solution is fresh as having not been used for pickling of the annealed steel sheet S2. However, Fe gradually elutes from the annealed steel sheet S2 during the pickling, and the Fe concentration in the mixed acid solution gradually increases. Therefore, in this embodiment, the Fe concentration in the mixed acid solution in the mixed acid tank 30 is measured over time. This measurement may be made constantly or intermittently at regular intervals.

The annealing and pickling system illustrated in FIG. 1 include an Fe concentration meter 80 that measures the Fe concentration in the mixed acid solution in the mixed acid tank 30. As the Fe concentration meter 80, for example, it is possible to use an analyzer that uses near-infrared spectrometry to irradiate near-infrared rays at a pitch of 1 minute to the mixed acid solution and calculate the Fe concentration in the mixed acid solution from the change in spectrum after the irradiation.

The Fe concentration in the mixed acid solution is preferably maintained to be 0 g/L or higher. It is preferably maintained to be 50 g/L or lower. This is because an Fe concentration higher than 50 g/L leads to an excessive oxidizing effect by the mixed acid solution, causing yellowing on the surface of the steel sheet. Therefore, it is preferable to either return the Fe concentration in the mixed acid solution to zero when or before the Fe concentration of the mixed acid solution reaches 50 g/L by wasting all of the mixed acid solution in the mixed acid tank 30 and supplying a new fresh mixed acid solution to the mixed acid tank 30, or reduce the Fe concentration in the mixed acid solution by wasting a part of the mixed acid solution in the mixed acid tank 30 and adding a fresh mixed acid solution to the mixed acid tank 30.

### [Setting of Lower Limit of Ferrite Fraction in Surface Layer]

As already mentioned, the thickness of the Si-containing oxide layer after continuous annealing is usually about 1 µm from the surface of the steel sheet, and this Si-containing oxide layer should be removed in the pickling. However, in this Si-containing oxide layer, Si-containing oxides are concentrated only in a limited range, several tens of nanometers, of the surface layer, and below that, Si-containing oxides are contained in the steel microstructure. With respect to the steel microstructure, ferrite dissolves faster during the pickling with the mixed acid solution than martensite and retained austenite, and this difference is more pronounced when the Fe concentration in the mixed acid solution is high. Therefore, when the annealed steel sheet with a low ferrite fraction in the surface layer is subjected to the pickling, as the Fe concentration in the mixed acid solution increases, the entire surface layer is not fully removed, and martensite and retained austenite remain on the surface of the steel sheet after the pickling, forming surface irregularities and giving the surface a black color.

Therefore, it is important in this embodiment that a lower limit of ferrite fraction in a surface layer of the annealed steel sheet S2 to be subjected to the pickling be set according to the Fe concentration in the mixed acid solution measured. Specifically, the lower limit of the ferrite fraction in the surface layer of the annealed steel sheet S2 to be subjected to the pickling is set higher as the Fe concentration in the mixed acid solution measured rises. Only annealed steel sheets with a ferrite fraction in the surface layer at or above the set lower limit should be subjected to the pickling. As a result, even if the Fe concentration in the mixed acid solution increases, the surface of the steel sheet immediately after the pickling does not turn black, making it possible to produce an annealed and pickled steel sheet continuously and stably with excellent chemical convertibility, post-coating corrosion resistance, and surface appearance quality.

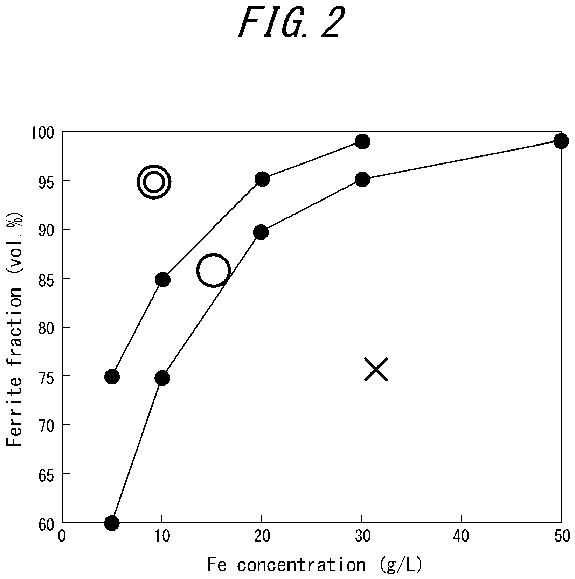

For example, as described in the EXAMPLES section below, the relationship between the Fe concentration in the mixed acid solution and the lower limit of ferrite fraction in the surface layer at which excellent surface appearance quality can be obtained at that Fe concentration (see, e.g., FIG. 2), is determined in advance. Then, based on this relationship, it is possible to set the lower limit of ferrite fraction in the surface layer of the annealed steel sheet S2 to be subjected to the pickling according to the Fe concentration in the mixed acid solution measured. Using the relationship illustrated in FIG. 2, the lower limit of ferrite fraction in the surface layer may be set depending on the Fe concentration measured so that the surface appearance quality is evaluated as "O" or "⊚".

The ferrite fraction (volume fraction) in the surface layer of the annealed steel sheet can be measured as follows. Specifically, a test piece is taken from a freely selected position in the width and rolling directions of the steel sheet. Then, the longitudinal cross section parallel to the rolling direction is polished, and the metallic structure that emerges from nital etching is observed by SEM within 1 µm from the surface of the test piece. In the SEM observation, 10 or more fields of view are observed at 3,000x magnification, and the low-luminance areas in each observed image are taken as ferrites to measure the area ratio thereof, and the average value is calculated. Since there is no microstructural change in the direction perpendicular to the rolling direction (width direction) and the area ratio in the cross section parallel to the rolling direction is equal to the volume fraction, the area ratio can be regarded as the volume fraction.

However, since the annealing, pickling, and repickling are performed continuously on the same line, it is difficult to measure the ferrite fraction in the surface layer of the annealed steel sheet S2 at a stage after the annealing and before the pickling in actual operation. The ferrite fraction in the surface layer of the annealed steel sheet S2 is determined by the chemical composition of the cold-rolled steel sheet S 1 before the annealing and the annealing conditions in the annealing; once the chemical composition is determined, the ferrite fraction is determined by the annealing conditions. Therefore, the lower limit of the ferrite fraction can be set by adjusting the annealing conditions in the annealing. In other words, the relationship between annealing conditions in the annealing and the ferrite fraction obtained under each annealing condition is identified in advance according to the chemical composition of the cold-rolled steel sheet S 1, and the annealing can be performed under the annealing condition under which a ferrite fraction at or above the set lower limit is obtained.

The annealing conditions that affect the ferrite fraction in the surface layer of the annealed steel sheet S2 are mainly the soaking temperature and the dew point of the soaking zone. The higher the soaking temperature, the higher the ferrite fraction. The higher the dew point of the soaking zone, the higher the ferrite fraction. Therefore, the annealing condition(s) to be adjusted to achieve the desired ferrite fraction can be one or both of the soaking temperature and the dew point of the soaking zone.

However, it is not preferable to change the soaking temperature during operation because it also affects the mechanical properties of the annealed and pickled steel sheet to be obtained as a product. Therefore, the annealing conditions to be adjusted to achieve the desired ferrite fraction is preferably the dew point of the soaking zone in the annealing furnace. For example, the relationship between the dew point of the soaking zone in the annealing and the ferrite fraction obtained at that dew point is identified in advance while fixing the annealing conditions other than the dew point including the soaking temperature, and the annealing can be performed at the dew point where a ferrite fraction at or above the set lower limit is obtained.

### [Chemical Composition of Cold-rolled Steel Sheet]

The chemical composition of the cold-rolled steel sheet S1 will be explained below. The unit of content of each element is "mass%", yet is simply denoted herein as "%".

### Si: 0.50 % to 3.00 %

The chemical composition of the cold-rolled steel sheet S1 is not particularly limited. However, it preferably contains Si in an amount of 0.50 mass% or more. It preferably contains Si in an amount of 3.00 mass% or less. Si is an effective element for achieving high strength of steel since it has a large effect of increasing the strength of steel without significantly impairing workability (solid solution strengthening ability). However, Si is also an element that adversely affects the chemical convertibility and the post-coating corrosion resistance. From a viewpoint of increasing strength by adding Si, the Si content is preferably 0.50 % or more, and more preferably 0.80 % or more. On the other hand, an excessively high Si content can significantly reduce hot rolling manufacturability and cold rolling manufacturability, adversely affecting the productivity and reducing the ductility of the steel sheet itself. Therefore, the Si content is preferably 3.00 % or less, and more preferably 2.50 % or less.

No specific limitations are placed on components other than Si and any values within the compositional range of a normal cold-rolled steel sheet are permissible. However, the following components are preferable.

### C: 0.03 % to 0.45 %

C is an effective element for adjusting the strength of steel, and from this viewpoint, the C content is preferably 0.03 % or more, and more preferably 0.05 % or more. On the other hand, from a viewpoint of not degrading weldability, the C content is preferably 0.45 % or less, and more preferably 0.20 % or less.

### Mn: 0.5 % to 5.0 %

Mn is an effective element for improving strength and hardenability, and from this viewpoint, the Mn content is preferably 0.5 % or more, and more preferably 1.0 % or more. On the other hand, from a viewpoint of not decreasing ductility and weldability, the Mn content is preferably 5.0 % or less, and more preferably 3.0 % or less.

### P: 0.05 % or less

P is one of the elements unavoidably contained in steel, yet from a viewpoint of not degrading local ductility, the P content is preferably 0.05 % or less, and more preferably 0.02 % or less. The P content is preferably reduced as much as possible, and its lower limit is not limited. However, from a viewpoint of dephosphorization cost, the P content may be 0.005 % or more.

### S: 0.005 % or less

S is one of the elements unavoidably contained in steel, yet from a viewpoint of not degrading weldability, the S content is preferably 0.005 % or less. The S content is preferably reduced as much as possible, and its lower limit is not limited. However, from a viewpoint of desulfurization cost, the S content may be 0.0001 % or more.

### Al: 0.001 % to 0.060 %

Al is an effective element for deoxidation of molten steel, and from this viewpoint, the Al content is preferably 0.001 % or more, and more preferably 0.020 % or more. On the other hand, from a cost perspective, the Al content is preferably 0.060 % or less.

### N: 0.005 % or less

N degrades bendability by forming coarse precipitates. Therefore, the N content is preferably 0.005 % or less. The N content is preferably reduced as much as possible, and its lower limit is not limited. Industrially, however, the N content may be 0.001 % or more.

### B: 0.001 % to 0.005 %

B is an effective element for improving hardenability, and from this viewpoint, the B content is preferably 0.001 % or more. On the other hand, if the B content is excessively high, the hardenability improving effect reaches saturation. Therefore, the B content is preferably 0.005 % or less.

In the chemical composition of the cold-rolled steel sheet S1, the balance other than the above components is Fe and inevitable impurities. However, the chemical composition may optionally contain at least one of the following components.

### Cu: 1.00 % or less

Cu promotes the formation of retained austenite (γ) phase and effectively contributes to increased strength. From this viewpoint, the Cu content is preferably 0.05 % or more. On the other hand, from a cost perspective, when Cu is added, the Cu content is 1.00 % or less.

### Nb: 0.050 % or less

Nb contributes to increased strength. From this viewpoint, the Nb content is preferably 0.005 % or more. On the other hand, from a cost perspective, when Nb is added, the Nb content is 0.050 % or less.

### Ti: 0.080 % or less

Ti contributes to increased strength. From this viewpoint, the Ti content is preferably 0.005 % or more. On the other hand, from a viewpoint of not degrading the chemical convertibility, when Ti is added, the Ti content is 0.080 % or less.

### V: 0.5 % or less

V is effective in improving delayed fracture resistance. From this viewpoint, the V content is preferably 0.004 % or more. On the other hand, from a viewpoint of not degrading the strength-ductility balance, when V is added, the V content is 0.5 % or less, preferably 0.1 % or less, and more preferably 0.05 % or less.

### Mo: 1.00 % or less

Mo contributes to increased strength. From this viewpoint, the Mo content is preferably 0.05 % or more. On the other hand, from a cost perspective, when Mo is added, the Mo content is preferably 1.00 % or less.

### Cr: 1.000 % or less

Cr contributes to increased hardenability. From this viewpoint, the Cr content is preferably 0.001 % or more. On the other hand, from a viewpoint of not degrading weldability, when Cr is added, the Cr content is preferably 1.000 % or less.

### Ni: 1.00 % or less

Ni promotes the formation of retained austenite (γ) phase. From this viewpoint, the Ni content is preferably 0.05 % or more. On the other hand, from a cost perspective, when Ni is added, the Ni content is preferably 1.00 % or less.

### EXAMPLES

Cold-rolled steel sheets with the chemical compositions listed in Table 1 (with the balance being Fe and inevitable impurities) were used as test pieces, and the test pieces were subjected to annealing. The annealing conditions were as follows: the furnace atmosphere was controlled with the dew points listed in Table 2, containing 10 vol.% hydrogen, with the balance being nitrogen, at the soaking temperatures listed in Table 2, and for the soaking time of 120 seconds. These conditions were set on the assumption that annealing was performed in the soaking zone of the CAL.

For the test pieces sampled from the annealed steel sheets thus obtained, the ferrite fraction in the surface layer was determined by the aforementioned method, and the results are listed in Table 2.

Then, the test pieces sampled from the annealed steel sheets were subjected to pickling by feeding the test pieces into the mixed acid solutions listed in Table 3 (nitric acid concentration: 125 g/L, hydrochloric or hydrofluoric acid concentration: 7.5 g/L, liquid temperature: 30 °C) to immerse the test pieces for 15 seconds. Furthermore, the test pieces were subjected to repickling by feeding the test pieces into hydrochloric acid (concentration: 8.0 g/L) to immerse the test pieces for 8 seconds. The test pieces samples from the annealed and pickled steel sheets thus obtained were washed with water and dried.

### <Evaluation of Surface Appearance Quality>

After sticking a cellophane tape^{®} ("cellophane tape" is a registered trademark in Japan, other counties, or both) to a surface of each test piece sampled from the corresponding annealed and pickled steel sheet and pulling it apart, the tape was applied to a white paper and the whiteness (L value) was measured in this condition to evaluate the surface appearance quality. The lower the whiteness, the more black powder adhered to the tape, meaning that the surface appearance quality was inferior. Surface appearance quality was evaluated based on the following criteria, with ⊚ and O being considered good. The results are listed in Table 3.
⊚: L value of 90 or more
O: L value of 75 or more and less than 90
×: L value less than 75

### <Evaluation of Chemical Convertibility>

Test pieces sampled from the annealed and pickled steel sheets were treated with zinc phosphate to evaluate chemical convertibility.
(1) Zinc phosphate treatment solution: PALBOND PB-L3065 available from Nihon Parkerizing Co., Ltd.
(2) Chemical conversion treatment: degreasing → water washing → surface adjustment → treatment with zinc phosphate → water washing

The surface of each test piece after subjection to the conversion treatment was observed by SEM at 1,000x magnification to examine the formation of phosphate crystals in 10 fields of view. When phosphate crystals formed uniformly in all 10 fields of view, it was evaluated as "⊚"; when there was one field of view where phosphate crystals did not form, it was evaluated as "O"; when there were 2 to 5 fields of view where phosphate crystals did not form, it was evaluated as "Δ"; and when there were more than 5 fields of view where phosphate crystals did not form, it was evaluated as "×". The results are listed in Table 3.

### <Evaluation of Post-coating Corrosion Resistance>

The test pieces sampled from the annealed and pickled steel sheets were subjected to chemical conversion treatment under the conditions described above and were further subjected to electrodeposition coating on the surface of the chemical conversion layer using an electrodeposition coating material "V-50" produced by Nippon Paint Co. Ltd. so as to obtain a film thickness of 25 µm. A cutter was used to form a cross-cut scar of 45 mm in length in the surface of each resultant test piece. The test piece was then subjected to a corrosion test in which 90 cycles were repeated with each cycle comprising salt spraying (5 mass% NaCl aqueous solution: 35 °C, relative humidity: 98 %) for 2 hours, followed by drying (60 °C, relative humidity: 30 %) for 2 hours, followed by wetting (50 °C, relative humidity: 95 %) for 2 hours. After this test, the test piece was washed with water and dried, and then a tape peeling test was performed on the cut scar section. The maximum total peeling width both left and right of the cut scar section was measured. Post-coating corrosion resistance can be evaluated as good when this maximum total peeling width is 6.0 mm or less. When the maximum total peeling width was 6.0 mm or less, it was evaluated as "O", and when the maximum total peeling width was greater than 6.0 mm, it was evaluated as "×". The results are listed in Table 3.

### [Table 1]

**Table 1**

| Steel sample ID | Chemical composition (mass%) | | | | | | | | | | | | | | |
|---|---|---|---|---|---|---|---|---|---|---|---|---|---|---|---|
| | C | Si | Mn | P | S | Al | N | B | Cu | Nb | Ti | V | Mo | Cr | Ni |
| A | 0.23 | 1.41 | 2.2 | 0.01 | 0.001 | 0.031 | 0.004 | 0.003 | - | - | - | - | - | - | - |
| B | 0.19 | 0.51 | 1.5 | 0.01 | 0.001 | 0.033 | 0.004 | 0.004 | - | - | - | - | - | - | - |
| C | 0.30 | 1.20 | 2.0 | 0.01 | 0.002 | 0.030 | 0.004 | 0.002 | - | - | - | - | - | - | - |
| D | 0.20 | 1.62 | 1.9 | 0.01 | 0.001 | 0.028 | 0.004 | 0.003 | 0.06 | - | - | - | - | - | - |
| E | 0.15 | 0.89 | 2.7 | 0.01 | 0.001 | 0.045 | 0.004 | 0.004 | - | 0.018 | 0.032 | - | - | - | - |
| F | 0.33 | 1.16 | 2.4 | 0.01 | 0.003 | 0.031 | 0.004 | 0.003 | - | - | - | 0.2 | - | - | - |
| G | 0.22 | 1.53 | 2.8 | 0.01 | 0.002 | 0.045 | 0.004 | 0.004 | - | - | - | - | 0.13 | 0.148 | - |
| H | 0.44 | 0.55 | 3.7 | 0.01 | 0.005 | 0.032 | 0.004 | 0.002 | - | - | - | - | - | - | 0.21 |

### [Table 2]

**Table 2**

| Test No. | Steel No. | Annealing | | Ferrite fraction in surface layer |
|---|---|---|---|---|
| | | Soaking temp. | Dew point | |
| | | °C | °C | vol.% |
| 1 | A | 820 | -5 | 95 |
| 2 | B | 820 | -5 | 99 |
| 3 | C | 820 | -5 | 92 |
| 4 | D | 820 | -5 | 91 |
| 5 | E | 820 | -5 | 89 |
| 6 | F | 820 | -5 | 85 |
| 7 | G | 820 | -5 | 81 |
| 8 | H | 820 | -5 | 91 |
| 9 | A | 780 | -5 | 73 |
| 10 | A | 800 | -5 | 82 |
| 11 | A | 840 | -5 | 96 |
| 12 | A | 860 | -5 | 97 |
| 13 | A | 870 | -5 | 98 |
| 14 | A | 820 | -35 | 58 |
| 15 | A | 820 | -24 | 64 |
| 16 | A | 820 | -18 | 77 |
| 17 | A | 820 | -15 | 80 |
| 18 | A | 820 | -11 | 87 |
| 19 | A | 820 | -7 | 92 |
| 20 | A | 820 | -1 | 97 |
| 21 | A | 820 | 5 | 98 |
| 22 | A | 820 | 15 | 99 |

### [Table 3]

**Table 3**

| Experiment No. | Test No. | Steel No. | Ferrite fraction in surface layer | Mixed acid | Fe concentration in mixed acid solution | Surface appearance | Chemical convertibility | Post-coating corrosion resistance |
|---|---|---|---|---|---|---|---|---|
| | | | vol.% | | g/L | | | |
| 1 | 16 | A | 77 | nitric acid + hydrochloric acid | 5 | ⊚ | ⊚ | ○ |
| 2 | 9 | A | 73 | nitric acid + hydrochloric acid | 5 | ○ | ⊚ | ○ |
| 3 | 14 | A | 58 | nitric acid + hydrochloric acid | 5 | × | ⊚ | ○ |
| 4 | 1 | A | 95 | nitric acid + hydrochloric acid | 10 | ⊚ | ⊚ | ○ |
| 5 | 1 | A | 95 | nitric acid + hydrofluoric acid | 10 | ⊚ | ⊚ | ○ |
| 6 | 2 | B | 99 | nitric acid + hydrochloric acid | 10 | ⊚ | ⊚ | ○ |
| 7 | 3 | C | 92 | nitric acid + hydrochloric acid | 10 | ⊚ | ⊚ | ○ |
| 8 | 4 | D | 91 | nitric acid + hydrochloric acid | 10 | ⊚ | ⊚ | ○ |
| 9 | 5 | E | 89 | nitric acid + hydrochloric acid | 10 | ⊚ | ⊚ | ○ |
| 10 | 6 | F | 85 | nitric acid + hydrochloric acid | 10 | ⊚ | ⊚ | ○ |
| 11 | 7 | a | 81 | nitric acid + hydrochloric acid | 10 | ○ | ⊚ | ○ |
| 12 | 8 | H | 91 | nitric acid + hydrochloric acid | 10 | ⊚ | ⊚ | ○ |
| 13 | 9 | A | 73 | nitric acid + hydrochloric acid | 10 | × | ⊚ | ○ |
| 14 | 10 | A | 82 | nitric acid + hydrochloric acid | 10 | ○ | ⊚ | ○ |
| 15 | 11 | A | 96 | nitric acid + hydrochloric acid | 10 | ⊚ | ⊚ | ○ |
| 16 | 12 | A | 97 | nitric acid + hydrochloric acid | 10 | ⊚ | ⊚ | ○ |
| 17 | 13 | A | 98 | nitric acid + hydrochloric acid | 10 | ⊚ | ⊚ | ○ |
| 18 | 14 | A | 58 | nitric acid + hydrochloric acid | 10 | × | ⊚ | ○ |
| 19 | 15 | A | 64 | nitric acid + hydrochloric acid | 10 | × | ⊚ | ○ |
| 20 | 16 | A | 77 | nitric acid + hydrochloric acid | 10 | ○ | ⊚ | ○ |
| 21 | 17 | A | 80 | nitric acid + hydrochloric acid | 10 | ○ | ⊚ | ○ |
| 22 | 18 | A | 87 | nitric acid + hydrochloric acid | 10 | ⊚ | ⊚ | ○ |
| 23 | 19 | A | 92 | nitric acid + hydrochloric acid | 10 | ⊚ | ⊚ | ○ |
| 24 | 20 | A | 97 | nitric acid + hydrochloric acid | 10 | ⊚ | ⊚ | ○ |
| 25 | 21 | A | 98 | nitric acid + hydrochloric acid | 10 | ⊚ | ⊚ | ○ |
| 26 | 22 | A | 99 | nitric acid + hydrochloric acid | 10 | ⊚ | ⊚ | ○ |
| 27 | 20 | A | 97 | nitric acid + hydrochloric acid | 20 | ⊚ | ⊚ | ○ |
| 28 | 19 | A | 92 | nitric acid + hydrochloric acid | 20 | ○ | ⊚ | ○ |
| 29 | 18 | A | 87 | nitric acid + hydrochloric acid | 20 | × | ⊚ | ○ |
| 30 | 22 | A | 99 | nitric acid + hydrochloric acid | 30 | ⊚ | ⊚ | ○ |
| 31 | 20 | A | 97 | nitric acid + hydrochloric acid | 30 | ○ | ⊚ | ○ |
| 32 | 19 | A | 92 | nitric acid + hydrochloric acid | 30 | × | ⊚ | ○ |
| 33 | 22 | A | 99 | nitric acid + hydrochloric acid | 50 | ○ | ⊚ | ○ |
| 34 | 20 | A | 97 | nitric acid + hydrochloric acid | 50 | × | ⊚ | ○ |
| 35 | 14 | A | 58 | nitric acid + hydrochloric acid | 0 | ⊚ | ⊚ | ○ |
| 36 | 10 | A | 82 | nitric acid + hydrochloric acid | 0 | ⊚ | ⊚ | ○ |
| 37 | 1 | A | 95 | nitric acid + hydrochloric acid | 0 | ⊚ | ⊚ | ○ |
| 38 | 1 | A | 95 | - | - | ⊚ | × | × |

Based on the results of Table 3, Table 4 summarizes the ferrite fraction in the surface layer on the borderline between "O" and "×" evaluations of surface appearance quality, and between "⊚" and "O" evaluations of surface appearance quality, for each Fe concentration in the mixed acid solution. Based on the results in Table 3, FIG. 2 presents a graph illustrating the relationship between the Fe concentration in the mixed acid solutions, the ferrite fraction in the surface layers of the annealed steel sheets, and the surface appearance quality of the annealed and pickled steel sheets.

### [Table 4]

**Table 4**

| Fe concentration (g/L) | Ferrite fraction (vol. %) | |
|---|---|---|
| | ⊚/○ | ○/× |
| 5 | 75 | 60 |
| 10 | 85 | 75 |
| 20 | 95 | 90 |
| 30 | 99 | 95 |
| 50 | | 99 |

As can be seen from Table 4 and FIG. 2, in the case of the cold-rolled steel sheets having the chemical compositions listed in Table 1, for example, the following criteria may be set: (1) if the Fe concentration is in the range of 5 g/L or less, the ferrite fraction in the surface layer is preferably set to 60 % or more, and more preferably to 75 % or more; (2) if the Fe concentration is in the range of more than 5 g/L to 10 g/L, the ferrite fraction in the surface layer is preferably set to 75 % or more, and more preferably to 85 % or more; (3) if the Fe concentration is in the range of more than 10 g/L to 20 g/L, the ferrite fraction in the surface layer is preferably set to 90 % or more, and more preferably to 95 % or more; (4) if the Fe concentration is in the range of more than 20 g/L to 30 g/L, the ferrite fraction in the surface layer is preferably set to 95 % or more, and more preferably to 99 % or more; and (5) if the Fe concentration is in the range of more than 30 g/L to 50 g/L, the ferrite fraction in the surface layer is preferably set to 99 % or more. Alternatively, using the relationship illustrated in FIG. 2, the ferrite fraction in the surface layer may be set depending on the measured Fe concentration so that the surface appearance quality is evaluated as "O" or "⊚".

As an operational example to satisfy the criteria listed in Table 4, when the soaking temperature is set at 820 °C, the following criteria may be set: (1) if the Fe concentration is in the range of 5 g/L or less, the dew point is set to -15 °C or higher; (2) if the Fe concentration is in the range of over 5 g/L to 10 g/L, the dew point is set to -10 °C or higher; (3) if the Fe concentration is in the range of over 10 g/L to 20 g/L, the dew point is set to -5 °C or higher; (4) if the Fe concentration is in the range of over 20 g/L to 30 g/L, the dew point is set to 5 °C or higher; and (5) if the Fe concentration is in the range of over 30 g/L to 50 g/L, the dew point is set to 15 °C or higher.

### INDUSTRIAL APPLICABILITY

According to the method for producing an annealed and pickled steel sheet disclosed herein, it is possible to continuously and stably produce an annealed and pickled steel sheet that is excellent in chemical convertibility, post-coating corrosion resistance, and surface appearance quality. Therefore, the annealed and pickled steel sheets produced according to the present disclosure can be suitably used for, for example, automotive body parts, home appliance parts, and construction parts.

### REFERENCE SIGNS LIST

- 10: Continuous annealing furnace
- 12: Heating zone
- 14: Soaking zone
- 16: Cooling zone
- 20: Water tank
- 30: Mixed acid tank
- 40: Water tank
- 50: Acid tank
- 60: Water tank
- 70: Roller (sheet feeder)
- 80: Fe concentration meter
- S1: Cold-rolled steel sheet
- S2: Annealed steel sheet
- S3: Annealed and pickled steel sheet

## Claims

1. A method for producing an annealed and pickled steel sheet in a continuous manner by continuously performing:
subjecting a cold-rolled steel sheet to annealing in an annealing furnace by feeding the cold-rolled steel sheet through the annealing furnace to obtain an annealed steel sheet;
subjecting the annealed steel sheet discharged from the annealing furnace to pickling with a mixed acid solution containing a first acid that is oxidizing and a second acid that is non-oxidizing, by feeding the annealed steel sheet into a mixed acid tank holding the mixed acid solution; and
subjecting the annealed steel sheet discharged from the mixed acid tank to repickling with an acid solution containing a third acid that is non-oxidizing, by feeding the annealed steel sheet into an acid tank holding the acid solution, to thereby obtain an annealed and pickled steel sheet, wherein
Fe concentration in the mixed acid solution in the mixed acid tank is measured, and
a lower limit of ferrite fraction in a surface layer of the annealed steel sheet to be subjected to the pickling is set according to the Fe concentration measured.

2. The method for producing an annealed and pickled steel sheet according to claim 1, wherein the lower limit of the ferrite fraction in the surface layer of the annealed steel sheet to be subjected to the pickling is set higher as the Fe concentration rises.

3. The method for producing an annealed and pickled steel sheet according to claim 1 or 2, wherein the lower limit of the ferrite fraction is set by adjusting an annealing condition in the annealing.

4. The method for producing an annealed and pickled steel sheet according to claim 3, wherein the annealing condition is a dew point in a soaking zone of the annealing furnace.

5. The method for producing an annealed and pickled steel sheet according to any one of claims 1 to 4, wherein the first acid is nitric acid.

6. The method for producing an annealed and pickled steel sheet according to any one of claims 1 to 5, wherein the second acid is at least one selected from the group consisting of hydrochloric acid, sulfuric acid, phosphoric acid, pyrophosphoric acid, formic acid, acetic acid, citric acid, hydrofluoric acid, and oxalic acid.

7. The method for producing an annealed and pickled steel sheet according to any one of claims 1 to 6, wherein the third acid is at least one selected from the group consisting of hydrochloric acid, sulfuric acid, phosphoric acid, pyrophosphoric acid, formic acid, acetic acid, citric acid, hydrofluoric acid, and oxalic acid.

8. The method for producing an annealed and pickled steel sheet according to any one of claims 1 to 7, wherein the cold-rolled steel sheet has a chemical composition containing 0.50 mass% to 3.00 mass% of Si.

9. The method for producing an annealed and pickled steel sheet according to claim 8, wherein the chemical composition contains, in mass%, C: 0.03 % to 0.45 %, Si: 0.50 % to 3.00 %, Mn: 0.5 % to 5.0 %, P: 0.05 % or less, S: 0.005 % or less, Al: 0.001 % to 0.060 %, N: 0.005 % or less, and B: 0.001 % to 0.005 %, with the balance being Fe and inevitable impurities.

10. The method for producing an annealed and pickled steel sheet according to claim 9, wherein the chemical composition further contains, in mass%, at least one selected from the group consisting of Cu: 1.00 % or less, Nb: 0.050 % or less, Ti: 0.080 % or less, V: 0.5 % or less, Mo: 1.00 % or less, Cr: 1.000 % or less, and Ni: 1.00 % or less.
